# EUROPEAN PATENT APPLICATION

(11) **EP 4 116 715 A1**
(43) Date of publication of application: **11.01.2023**
(21) Application number: 21763224.9
(22) Date of filing: 02.02.2021
(51) Int. Cl.: G01N 35/04, G01N 21/05, G01N 21/76

(54) **AUTOMATIC ANALYSIS DEVICE**

(30) Priority: 05.03.2020 JP 2020037543
(71) Applicant: Hitachi High-Tech Corporation, Minato-ku Tokyo 105-6409 (JP)
(72) Inventor: KAJIHARA, Yuri, Tokyo 105-6409 (JP); YAMASHITA, Taichiro, Tokyo 100-8280 (JP); OGUCHI, So, Tokyo 105-6409 (JP); SUGIMURA, Yoshiaki, Tokyo 105-6409 (JP); NISHITANI, Aiko, Tokyo 105-6409 (JP)
(74) Representative: MERH-IP Matias Erny Reichl Hoffmann Patentanwälte PartG mbB
(86) International application number: PCT/JP2021/003740
(87) International publication number: WO 2021/176924

(57) **Abstract**

Provided is an automatic analyzer that improves workability when carrying in and out a flow cell.

A flow cell that allows a reaction liquid including a specimen and a reagent to pass, a photodetector for detecting light emitted by the reaction liquid, and a housing for housing the flow cell and the photodetector are included, in which the housing includes a lid that opens and closes when the flow cell is carried in and out of the housing, the lid is connected to the housing via a hinge, and a fixing member for fixing the lid in a closed state is provided on the lid or the housing.

## Description

### Technical Field

The present invention relates to an automatic analyzer.

### Background Art

The automatic analyzer is a device for automatically analyzing a sample such as blood and urine. In the immunoanalysis method which has been known as the process to be implemented by the detection unit of the automatic analyzer, the sample containing reaction liquid is introduced into the flow cell, and the resultant emitted light is detected by the photodetector. The carry-out/in section of the flow cell of the detection unit is generally structured to have the inside sealed for light shielding by screwing the detachable lid.

Patent Literature 1 discloses the analyzer provided with the sealing structure using the lid, which is configured to substantially seal the tank body using the shutter to suppress temperature change (see paragraph 0054).

### Citation List

### Patent Literature

Patent Literature 1: Japanese Unexamined Patent Application Publication No. 2018-205046

### Summary of Invention

### Technical Problem

The detection unit for fixing the lid using the screw requires screwing the lid on/off every carry-out or carry-in of the flow cell, resulting in low operability.

It is an object of the present invention to provide an automatic analyzer with improved operability for carry-out or carry-in of the flow cell.

### Solution to Problem

In order to solve the problem as described above, the present invention provides an automatic analyzer provided with a flow cell which allows a reaction liquid including a specimen and a reagent to pass, a photodetector for detecting light emitted by the reaction liquid, a housing for housing the flow cell and the photodetector. The housing includes a lid that opens and closes when the flow cell is carried in and out of the housing. The lid is connected to the housing via a hinge. A fixing member for fixing the lid in a closed state is provided on the lid or the housing.

### Advantageous Effect of Invention

The disclosure provides the automatic analyzer with improved operability for carry-out or carry-in of the flow cell.

### Brief Description of Drawings

[Fig. 1] Fig. 1 is a plan view of an automatic analyzer according to an embodiment.
[Fig. 2] Fig. 2 is a diagram showing a flow path configuration of a detection unit.
[Fig. 3] Fig. 3 is a perspective view showing the appearance of the detection unit.
[Fig. 4] Fig. 4 is a perspective view showing a state where a lid of the detection unit is open.
[Fig. 5] Fig. 5 is a plan view showing the open and closed state of the lid when the detection unit is viewed from above in a vertical direction.
[Fig. 6] Fig. 6 is a perspective view showing a state where the lid of the detection unit is closed.
[Fig. 7] Fig. 7 is a diagram in which a flow cell is carried in while the lid of the detection unit is open.
[Fig. 8] Fig. 8 is a plan view showing a desirable region as a position of a rotation axis of a hinge when the detection unit is viewed from above in a vertical direction.
[Fig. 9] Fig. 9 is a plan view showing the open and closed state of the lid when the rotation axis of the hinge is on line B in Fig. 8.
[Fig. 10] Fig. 10 is a plan view showing the open and closed state of the lid when the rotation axis of the hinge is within an area S2 in Fig. 8.
[Fig. 11] Fig. 11 is a plan view showing the open or closed state of the lid when the rotation axis of the hinge is within a region S1 of Fig. 8.

### Description of Embodiment

An embodiment of the present invention will be described referring to the drawings.

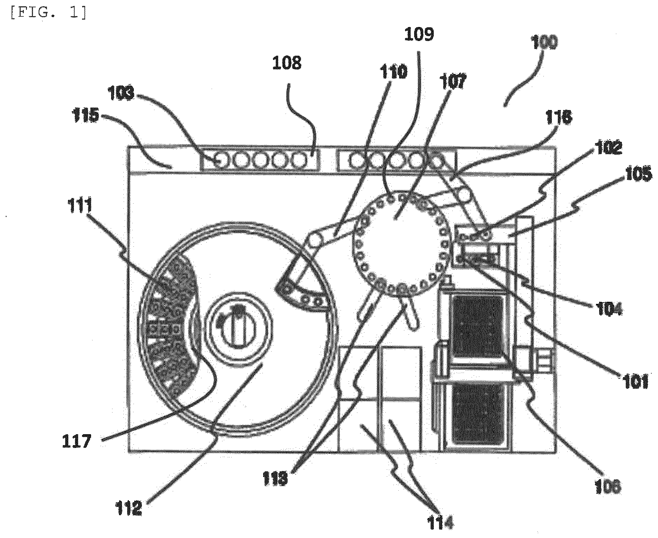

Referring to Fig. 1, an overall structure of an automatic analyzer according to the embodiment will be described. Fig. 1 is a plan view of the automatic analyzer according to the embodiment.

An automatic analyzer 100 according to the embodiment includes a rack 108, a rack transport line 115, a sample dispensing mechanism 116, an incubator disk 107, a storage unit 106, a transport mechanism 105, a reaction vessel agitation mechanism 104, a disposal hole 102, a reagent disk 117, a reagent dispensing mechanism 110, a reaction liquid aspiration nozzle 113, a detection unit 114, and a not shown control section.

A sample vessel 103 for holding a sample (specimen) is placed on the rack 108.

The rack transport line 115 transports the sample vessel 103 placed on the rack 108 to a sample dispensing position near the sample dispensing mechanism 116.

The sample dispensing mechanism 116 includes a rotationally and vertically driven arm section, and a nozzle section for aspiration/delivery of the sample. A sample dispensing tip is detachably attached to a tip end of the nozzle section. The sample dispensing mechanism 116 lowers the nozzle section to the sample vessel 103 at the sample dispensing position to aspirate a predetermined amount of sample, and then turns the arm section to deliver the sample to a reaction vessel 109 on the incubator disk 107 at a predetermined position.

The incubator disk 107 has multiple vessel holding holes along a circumferential direction so that multiple reaction vessels 109 can be placed. The incubator disk 107 is rotationally operated to move the respective reaction vessels 109 to predetermined positions, for example, a reaction vessel placement position, a reagent delivery position, a sample delivery position, a reaction vessel disposal position, and the like.

The storage unit 106 has multiple unused reaction vessels 109 and multiple unused sample dispensing tips placed therein.

The transport mechanism 105 is movable in three directions, that is, an X-axis direction, a Y-axis direction and a Z-axis direction for transporting the reaction vessel 109 and the sample dispensing tip. For example, the transport mechanism 105 transports the unused reaction vessel 109 to the vessel holding hole in the incubator disk 107 at a predetermined position, and the unused sample dispensing tip to a sample dispensing tip mounting position 101. The transport mechanism 105 transports the reaction vessel 109 to the reaction vessel agitation mechanism 104, and used reaction vessel 109 or the used sample dispensing tip to the disposal hole 102.

The reaction vessel agitation mechanism 104 is a mechanism for mixing a reagent with the sample in the reaction vessel 109 which has been taken from the incubator disk 107.

The used reaction vessel 109 and the used sample dispensing tip are dropped off into the disposal hole 102.

Multiple reagent vessels 111 are placed on the reagent disk 117. An upper part of the reagent disk 117 is covered with a reagent disk cover 112 so that an internal temperature of the reagent disk 117 is kept to a predetermined temperature. An opening unit is formed in a part of the reagent disk cover 112.

The reagent dispensing mechanism 110 includes a rotationally and vertically driven arm section, and a nozzle section for aspiration/delivery of the sample. The reagent dispensing mechanism 110 immerses a tip end of the nozzle section in the reagent in the reagent vessel 111 for aspirating the reagent, and delilvers the aspirated reagent to the reaction vessel 109.

The reaction liquid aspiration nozzle 113 is rotationally and vertically driven to aspirate the reaction liquid which has been mixed in the reaction vessel 109 on the incubator disk 107, and sends the aspirated reaction liquid to the detection unit 114.

The detection unit 114 detects a specific component contained in the reaction liquid aspirated by the reaction liquid aspiration nozzle 113.

The not shown control section controls an overall operation of the automatic analyzer 100. The control section receives an input from an operator, and outputs a control signal to each of the mechanisms for operation control.

An operation of the automatic analyzer 100 according to the embodiment will be described.

The transport mechanism 105 moves to be located above the storage unit 106. It moves downward to pick up the unused reaction vessel 109, and then moves upward. Thereafter, the transport mechanism 105 moves to be located above a predetermined position of the incubator disk 107. It moves downward so that the reaction vessel 109 is placed in the vessel holding hole. The transport mechanism 105 moves to be located above the storage unit 106. It moves downward to pick up the unused sample dispensing tip, and moves upward. The transport mechanism 105 moves to be located above the sample dispensing tip mounting position 101, and moves downward to place the sample dispensing tip to the sample dispensing tip mounting position 101. Then the sample dispensing mechanism 116 moves to be located above the sample dispensing tip mounting position 101, and moves downward to press fit the sample dispensing tip with a tip end of the nozzle section for mounting.

The reagent dispensing mechanism 110 is rotationally moved to be located above the opening unit of the reagent disk cover 112, and then moves downward to immerse the tip end of the nozzle section in the reagent in the reagent vessel 111 for aspirating a predetermined amount of reagent. The reagent dispensing mechanism 110 moves upward and further moves rotationally to be located above a predetermined position of the incubator disk 107. It moves downward to deliver the reagent to the reaction vessel 109.

The sample dispensing mechanism 116 mounted with the sample dispensing tip rotationally moves to be located above the sample vessel 103 placed on the rack 108, and then moves downward to aspirate a predetermined amount of the sample in the sample vessel 103. Thereafter, the sample dispensing mechanism 116 rotationally moves downward to the sample delivery position on the incubator disk 107 to deliver the sample to the reaction vessel 109 to which the reagent has been dispensed. Thereafter, the sample dispensing mechanism 116 rotationally moves to be located above the disposal hole 102 so that the used sample dispensing tip is dropped off into the disposal hole 102.

Thereafter, the reaction vessel 109 to which the sample and the reagent have been delivered rotationally moves to a predetermined position by rotating operation of the incubator disk 107, and is transported to the reaction vessel agitation mechanism 104 by the transport mechanism 105. The reaction vessel agitation mechanism 104 applies rotary motion to the reaction vessel 109 to agitate the sample and the reagent in the reaction vessel 109 so that they are mixed. The reaction vessel 109 is then returned to the predetermined position on the incubator disk 107 by the transport mechanism 105.

After an elapse of predetermined reaction time at the predetermined position, the reaction liquid aspiration nozzle 113 moves to be located above the reaction vessel 109, and moves downward for aspirating the reaction liquid in the reaction vessel 109. The reaction liquid aspirated by the reaction liquid aspiration nozzle 113 is analyzed by the detection unit 114.

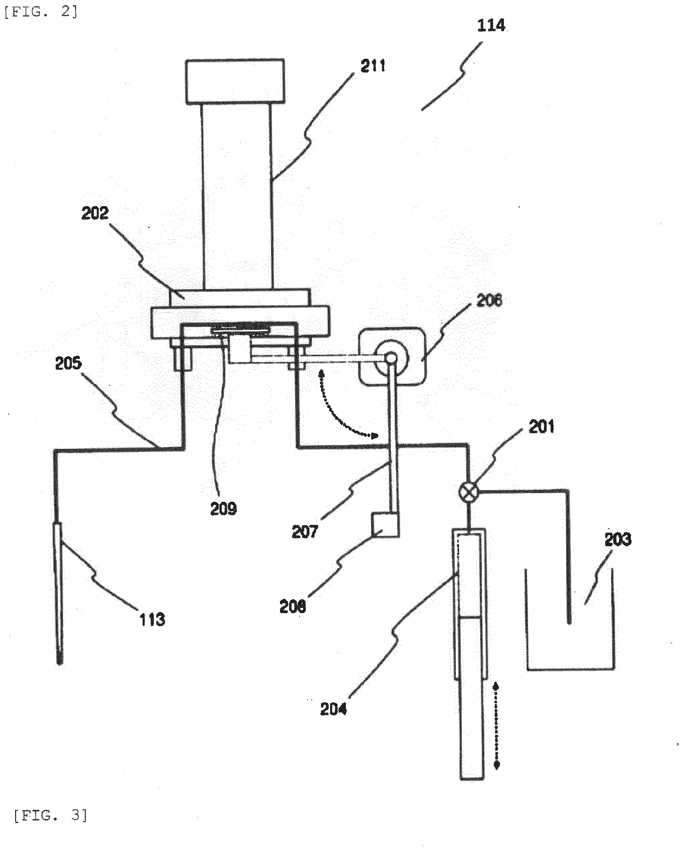

A structure of the detection unit 114 will be described referring to Fig. 2. In the immunoanalysis field, the fluorometic method, the chemiluminescence method, and the electrochemical luminescence method have been employed as an analysis method for measuring existence and concentration of an infinitesimal amount (10⁻¹⁴ mol or less) of measuring object in the reaction liquid. In the embodiment, an explanation will be made with respect to the use of the electrochemical luminescence method for detecting light emitted from the reaction liquid to which voltage is applied.

The electrochemical luminescence method is implemented by binding the luminescent reagent to the measuring object such as hormone through antigen-antibody reaction for quantifying luminescence derived from the luminescent reagent. The measurement is carried out while pouring the reaction liquid into the flow cell.

The detection unit 114 according to the embodiment includes a flow cell 209 to which the reaction liquid is introduced, a magnetic trap unit for capturing magnetic particles contained in the reaction liquid, and a photomultiplier tube 211 for detecting light generated in the flow cell 209.

As Fig. 2 illustrates, the flow cell 209 has an inlet side of a flow passage connected to the reaction liquid aspiration nozzle 113, and an outlet side of the flow passage connected to a syringe 204 which causes a pressure difference for aspirating the reaction liquid, and a drain 203 for discharging the reaction liquid or the like via a piping 205. The outlet side of the flow passage of the flow cell 209 is branched into two flow passages by a flow switching valve 201 in the middle of the flow passage. One of the branched flow passages reaches the syringe 204, and the other reaches the drain 203. The flow cell 209 is housed in a case 202 below the photomultiplier tube 211, and fixed to a cell frame 210.

The magnetic trap unit includes a magnet 208 for capturing magnetic particles, a magnet arm 207, and a magnet drive motor 206. The magnetic trap unit drives the magnet drive motor 206 to rotate the magnet arm 207 so that the magnet 208 for capturing magnetic particles is positionally switched between a working position (position close to the flow cell 209) and a retracting position (position apart from the flow cell 209).

The photomultiplier tube 211 is a photodetector disposed above the flow cell 209. A not shown voltage application unit is connected to the flow cell 209. Upon application of voltage by the voltage application unit, the magnetic particles captured in the flow cell 209 cause luminescence phenomenon. The photomultiplier tube 211 measures intensity of light generated in the flow cell 209.

An explanation will be made with respect to a method of measuring the light intensity, which is implemented by the detection unit 114.

The flow switching valve 201 is switched in the state where the reaction liquid aspiration nozzle 113 is immersed in the reaction liquid in the reaction vessel 109 so that the flow passage to the flow cell 209 is opened while closing the flow passage to the drain 203. Upon activation of the syringe 204 for aspiration, the reaction liquid in the reaction vessel 109 is aspirated. The reaction liquid then flows into the flow cell 209 via the piping 205. The reaction liquid is prepared by mixing the sample which contains the measuring object and the reagent (luminescent labeling reagent, and reagent which contains magnetic particles) so that an immune complex is formed.

In the foregoing circumstance, the magnet drive motor 206 drives the magnet arm 207 to rotate at 90°. The magnet 208 for capturing magnetic particles at the tip end of the magnet arm 207 is brought to be closer to the position just below the flow cell 209 (moving to the working position). The magnetic particles in the reaction liquid flowing through the flow cell 209 are magnetically captured thereby.

Thereafter, the reaction liquid aspiration nozzle 113 moves to a vessel which contains luminous reaction assisting liquid in which the nozzle is immersed, and the syringe 204 is activated for aspiration. As a result, the luminous reaction assisting liquid flows into the flow cell 209 so that the residual reaction solution in the flow cell 209 is replaced with the luminous reaction assisting liquid in the state where the immune complex is kept magnetically captured.

After the drive operation to the syringe 204 is stopped, the magnet drive motor 206 is driven in the opposite direction to reversely rotate the magnet arm 207 at 90°. The magnet 208 for capturing magnetic particles then moves apart from the flow cell 209 (moving to the retracting position).

The photomultiplier tube 211 measures a dark current output signal in the flow cell 209 through a light transmission window formed on the upper surface of the flow cell 209. Then the voltage application unit applies voltage to the inside of the flow cell 209 to induce electrochemical luminescence reaction of the luminescent label contained in the immune complex. In this case, the photomultiplier tube 211 measures the light intensity through the light transmission window to quantify the measuring object contained in the immune complex.

After measurement of the light intensity, the reaction liquid aspiration nozzle 113 moves to the vessel which contains cleaning solution. The syringe 204 is activated for aspiration in the state where the nozzle is immersed in the cleaning solution. The cleaning solution flows into the piping 205 and the flow cell 209 to wash away the reaction liquid and the luminous reaction assisting liquid which have been remained in the piping 205 and the flow cell 209. In this manner, the piping 205 and the flow cell 209 are cleaned.

Finally, the flow switching valve 201 is switched to open the flow passage to the drain 203 while closing the flow passage to the flow cell 209. When the syringe 204 is activated for discharge, the reaction liquid, the luminous reaction assisting liquid, and the cleaning solution which have been remained in the syringe 204 are discharged to the drain 203.

A series of operations as described above are repeatedly performed to analyze multiple samples with respect to multiple analysis items.

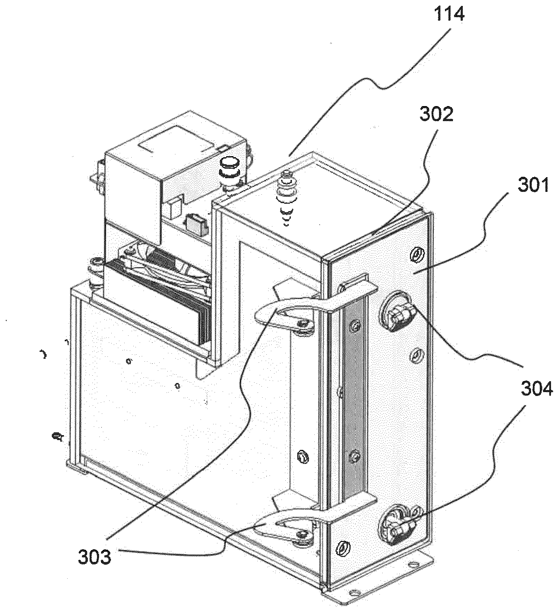

Fig. 3 is a perspective view of an appearance of the detection unit 114 according to the embodiment. The detection unit 114 has the flow cell 209 and the photomultiplier tube 211 built therein. In the case of immunoanalysis by implementing the electrochemical luminescence method, the photomultiplier 211 receives very weak light resulting from the luminescent reaction of the luminescent label contained in the immune complex inside the flow cell 209 under the low noise condition. It is taken as an electric signal. In order to shield light from outside as the main cause of decrease in the S/N ratio upon signal measurement by the photomultiplier tube 211, each of a housing 300 and a lid 301 of the detection unit 114 is made of a member with light-proofness, and structured to exhibit high sealability.

The lid 301 according to the embodiment is connected to the housing 300 via a hinge 303. The lid 301 is provided with a position fixing member for fixation in the closed state. The position fixing member is exemplified by a fastening jig 304. The operation for screwing the lid 301 on/off is not required, and accordingly, the carry-out/in of the flow cell 209 can be easily performed in a short period of time.

A peripheral edge of an opening unit 302 of the housing 300, that is, a front end of a side wall 300a of the housing 300 is provided with a sealing member over an entire periphery. The sealing member may be made of an arbitrary material so long as it exhibits cushioning property and insulating property, for example, black soft rubber, soft polyurethane, or the like. The sealing member may be provided on a back side of the lid 301 at a position which faces the front end of the side wall 300a of the housing 300. The detection unit 114 according to the embodiment includes the sealing member to improve sealability. This makes it possible to prevent the temperature change owing to external intrusion of light or air.

The fastening jig 304 may be other fixing member like a hook so long as such fixing member presses the lid 301 against the sealing member between the housing 300 and the lid 301 for fixing the position thereof. The fastening jig 304 may be attached to the housing 300, and configured to change its position from the housing 300 to the lid 301 for locking operation. The structure for fixing the lid 301 in the closed state using magnetic force may provide the immunoanalysis implemented through the electrochemical luminescence method using the magnetic trap unit and the photomultiplier tube 211. Accordingly, it is preferable that the fixing member is made of a non-magnetic material, and serves to mechanically fasten the lid 301 to the housing 300.

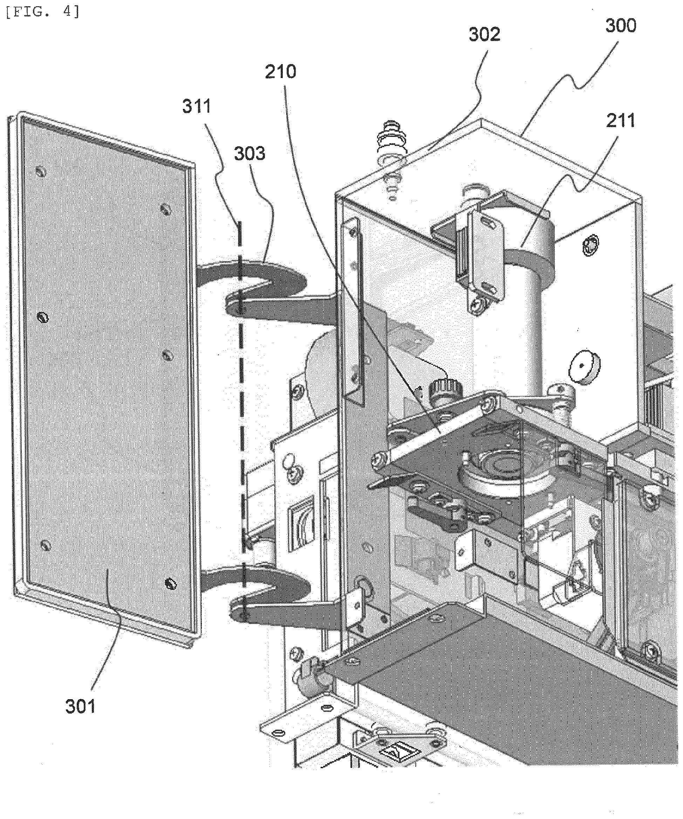

Fig. 4 is a perspective view of a state where the lid 301 of the detection unit 114 is opened. The used flow cell 209 is replaced with the new one, or the flow cell 209 is mounted before shipment in the state as illustrated in Fig. 4. As Fig. 4 illustrates, a rotation axis 311 of the hinge 303 of the detection unit 114 according to the embodiment is positioned outside the housing 300.

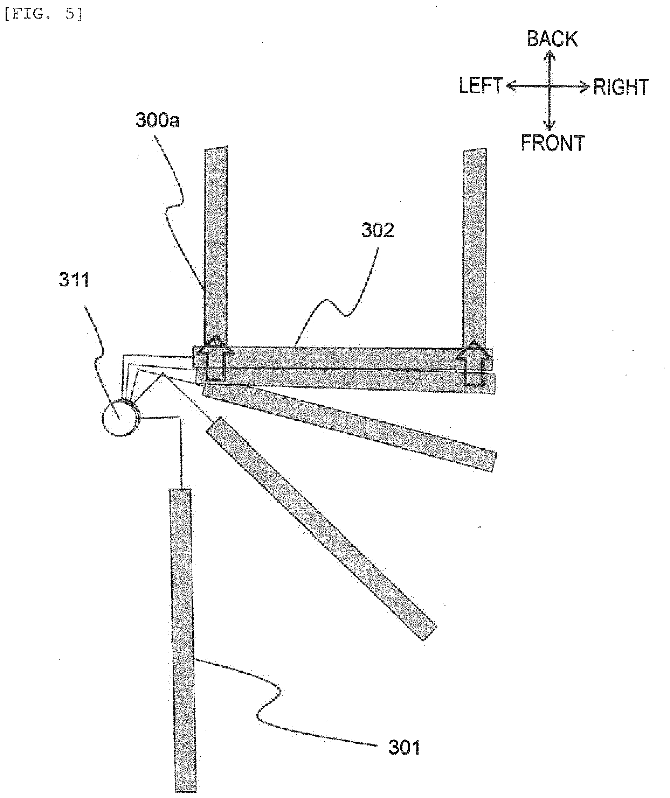

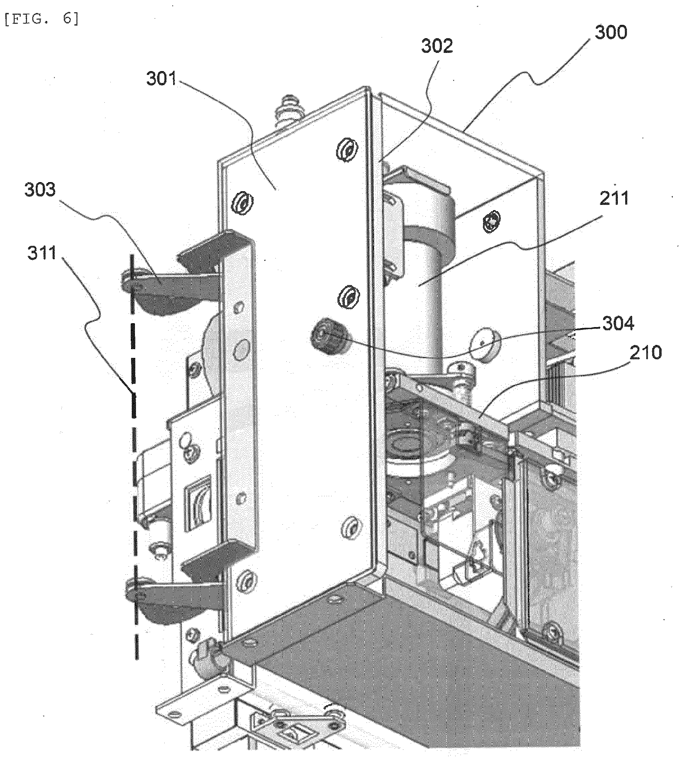

Fig. 5 is a plan view showing the open and closed state of the lid 301 when the detection unit 114 is vertically viewed from above. As Fig. 5 illustrates, the lid 301 linearly moves toward the opening unit 302 of the housing 300 just before it is brought to the closed state. After the lid 301 performs a predetermined turning operation from the open state as illustrated in Fig. 4, the lid 301 linearly moves by a predetermined distance. The housing 300 is then brought into the closed state as illustrated in Fig. 6. This makes it possible to prevent the pressing force of the lid 301 from being continuously applied biasedly only to the specific one of the left and right side walls 300a, that is, the left side wall 300a close to the hinge 303. As the hinge 303 is positioned outside the housing 300, it is possible to uniformize the force received by the front ends of the left and right side walls 300a of the housing 300 from the lid 301. This makes it possible to prevent difference in the applied pressing force between the left and right sides of the lid 301. As a result, the sealability (light-proofness) of the detection unit 114 can be maintained even in the structure using the hinge. This allows the photomultiplier tube 211 to detect the signal highly accurately.

If the generally employed door structure is employed, the rotary axis of the hinge is positioned at the inner side of the housing. This may prolong the duration of the state where the door is in partial contact with the front end of the side wall closer to the hinge. If such door structure is employed for the detection unit, the pressing force applied from the lid 301 to the side wall closer to the hinge is different from the one applied to the side wall distant from the hinge, resulting in lowered light-proofness.

Fig. 6 is a perspective view showing a state where the lid 301 of the detection unit 114 is closed. The position of the lid 301 cannot be held by merely turning the lid 301 by the hinge 303 to move to the position at which its left and right ends abut on the side walls 300a of the housing 300. For this reason, the lid 301 of the embodiment is provided with the fastening jig 304 to allow the lid 301 to hold the closed state of the housing 300.

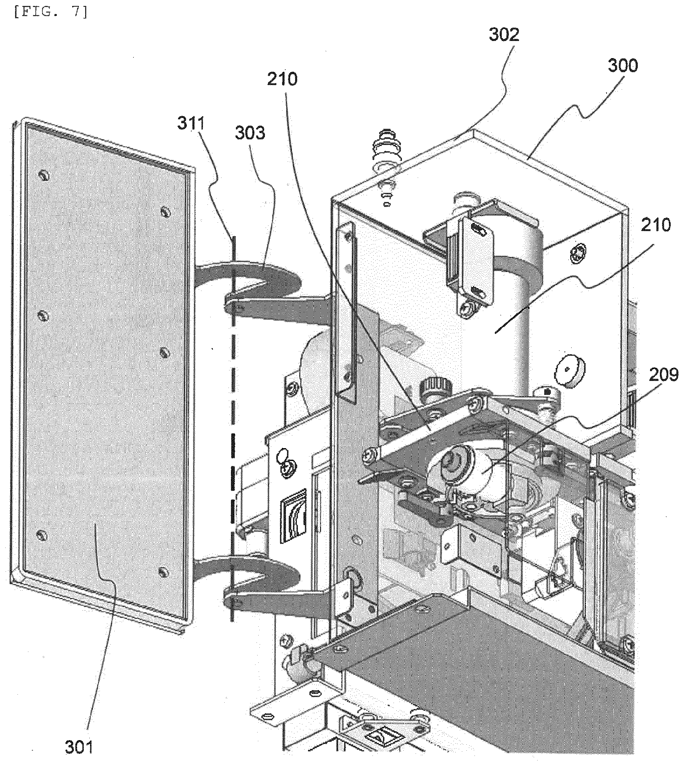

Fig. 7 is a perspective view indicating the state in which the flow cell 209 is carried in while the lid 301 of the detection unit 114 is opened. The carry-in operation of the flow cell 209 will be described herein. In the closed state as illustrated in Fig. 6, the operator turns the lid 301 via the hinge 303 after releasing the fastening jig 304 to attain the open state as illustrated in Fig. 4. Then the operator carries in the flow cell 209 from the opening unit 302, and places the flow cell 209 to be in tight contact with the cell frame 210 as illustrated in Fig. 7. The operator then turns the lid 301 via the hinge 303 to the closed state, and the fastening jig 304 is tightened to allow the lid 301 to fix the closed state.

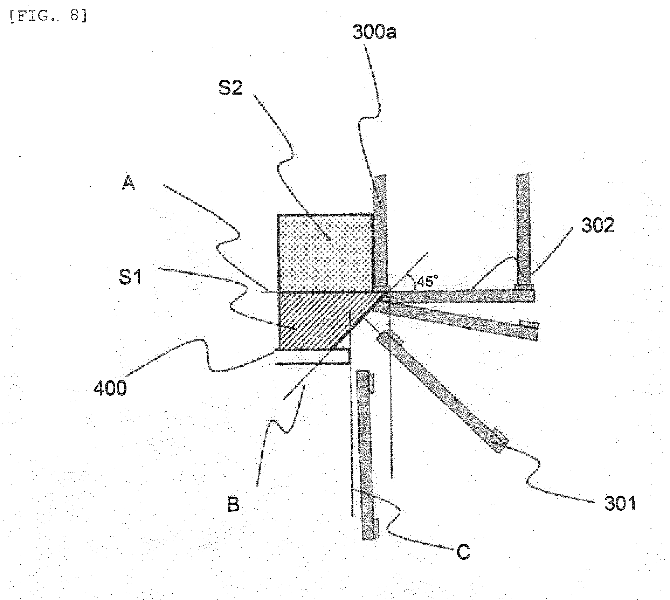

Fig. 8 is a plan view showing a desirable region as a position of the rotation axis of the hinge 303 when the detection unit 114 is vertically viewed from above. Referring to Fig. 8, a region S1 is the most desirable, and a region S2 is the next desirable. By positioning the rotary axis of the hinge 303 in the region as described above, the wide space can be secured in front of the opening unit 302 when the lid 301 is opened at 90°, resulting in improved operability for attachment/detachment of the flow cell 209.

The region S1 is defined by a line (line A in Fig. 8) extending outwardly from the front end of the side wall 300a connected to the hinge 303 in the direction perpendicular to the side wall, and a line (line B in Fig. 8) extending outwardly forward at the angle of 45° from the front end of the side wall 300a. The region S2 is outside the side wall 300a connected to the hinge 303, and positioned behind the opening unit 302. A line C in Fig. 8 indicates a position of an inner wall surface of an automatic analyzer housing 400. Explanations will be made in the respective cases where the rotary axis of the hinge 303 is on the line B, in the region S2, and in the region S1.

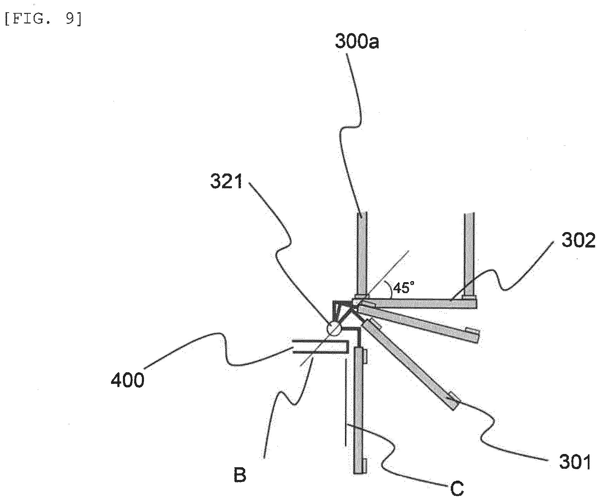

Fig. 9 is a plan view showing the open and closed sate of the lid 301 when a rotation axis 321 of the hinge 303 is positioned on the line B in Fig. 8, that is, the line extending from the front end of the side wall 300a outwardly forward at the angle of 45°. In this case, when the lid 301 is opened at 90°, the position of the lid 301 in the left-right direction corresponds with the position of the side wall 300a connected to the hinge 303 in the left-right direction. Accordingly, the space in front of the opening unit 302 is not so wide, which may make the attachment/detachment of the flow cell 209 difficult.

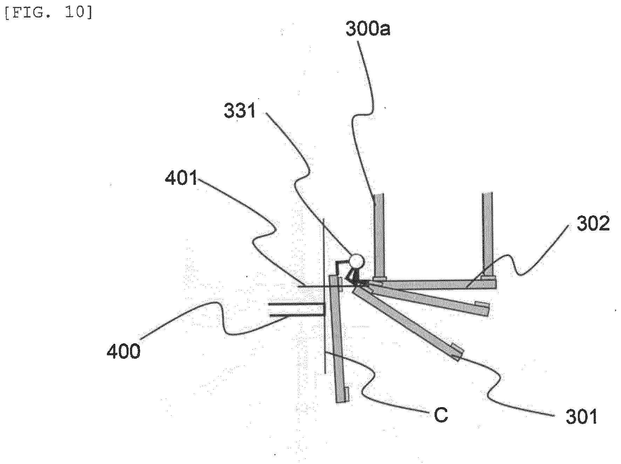

Fig. 10 is a plan view showing the open and closed state of the lid 301 when a rotation axis 331 of the hinge 303 is within the region S2 in Fig. 8, that is, the region which is positioned outside the side wall 300a connected to the hinge 303 and behind a surface 401 of the opening unit 302. In this case, the lid 301 can be opened outward from the position of the side wall 300a connected to the hinge 303 in the left-right direction. Accordingly, the space in front of the opening unit 302 can be widened sufficient to facilitate the attachment/detachment of the flow cell 209. The lid 301 will cause interference with the automatic analyzer housing 400 before it is opened at 90°. This may make it difficult to house the detection unit 114 in the automatic analyzer housing 400.

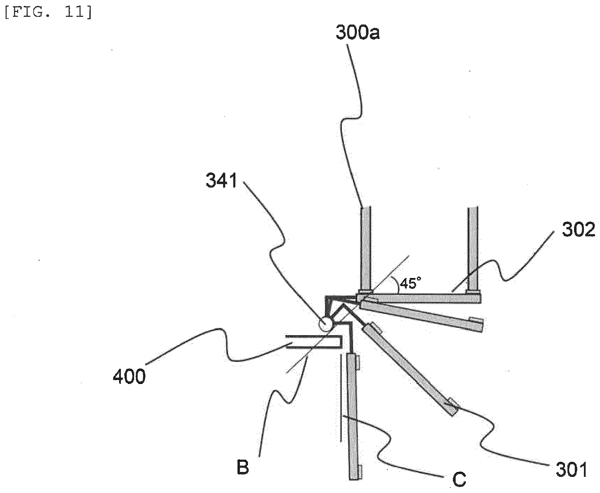

Fig. 11 is a plan view showing the open and closed state of the lid 301 when a rotation axis 341 of the hinge 303 is within the region S1 in Fig. 8, that is, the region defined by the line extending outwardly from the front end of the side wall 300a connected to the hinge 303 in the direction perpendicular to the side wall, and the line extending outwardly forward at the angle of 45° from the front end of the side wall 300a. In this case, the lid 301 can be opened outward from the position of the side wall 300a connected to the hinge 303 in the left-right direction. Accordingly, the space in front of the opening unit 302 can be widened sufficient to facilitate the attachment/detachment of the flow cell 209. The lid 301 will not cause interference with the automatic analyzer housing 400 even when the lid 301 is opened at 90°. This allows the detection unit 114 to be housed in the automatic analyzer housing 400. This structure prevents the lid 301 from being excessively opened. This may minimize the cause of temperature change in the photomultiplier tube 211 in the detection unit 114, and the reaction liquid in the flow cell 209. The lid 301 may be provided with a sensor for monitoring its open/closed state, based on which the state of the photomultiplier tube 211 is managed.

In the foregoing embodiment, the detection unit 114 has been described as the one used for immunoanalysis by implementing the electrochemical luminescence method. The hinge structure according to the embodiment is applicable to the detection unit used for other analysis method, for example, the fluorometic method, chemiluminescence method, and the like.

### Reference Signs List

100: automatic analyzer
101: sample dispensing tip mounting position
102: disposal hole
103: sample vessel
104: reaction vessel agitation mechanism
105: transport mechanism
106: storage unit
107: incubator disk
108: rack
109: reaction vessel
110: reagent dispensing mechanism
111: reagent vessel
112: reagent disk cover
113: reaction liquid aspiration nozzle
114: detection unit
115: rack transport line
116: sample dispensing mechanism
117: reagent disk
201: flow switching valve
202: case
203: drain
204: syringe
205: piping
206: magnet drive motor
207: magnet arm
208: magnet for capturing magnetic particles
209: flow cell
210: cell frame
211: photomultiplier tube
300: housing
300a: side wall
301: lid
302: opening unit
303: hinge
304: fastening jig
311, 321, 331, 341: rotation axis
400: automatic analyzer housing

## Claims

1. An automatic analyzer comprising:
a flow cell which allows a reaction liquid including a specimen and a reagent to pass;
a photodetector for detecting light emitted by the reaction liquid; and
a housing for housing the flow cell and the photodetector, wherein
the housing includes a lid that opens and closes when the flow cell is carried in and out of the housing,
the lid is connected to the housing via a hinge, and
a fixing member for fixing the lid in a closed state is provided on the lid or the housing.

2. The automatic analyzer according to claim 1, further comprising:
a sealing member on the periphery of an opening unit of the housing or on the back side of the lid.

3. The automatic analyzer according to claim 1, wherein
the fixing member is formed of a non-magnetic material and mechanically fastens the lid and the housing.

4. The automatic analyzer according to claim 1, wherein
the photodetector is a photomultiplier tube.

5. The automatic analyzer according to claim 1, wherein
the lid moves linearly toward the opening unit of the housing immediately before the lid enters the closed state.

6. The automatic analyzer according to claim 1, wherein
the rotation axis of the hinge is located outside the housing.

7. The automatic analyzer according to claim 6, wherein
the rotation axis of the hinge is located behind the opening unit of the housing.

8. The automatic analyzer according to claim 6, wherein
when viewed from above in a vertical direction, the rotation axis of the hinge is located in a region sandwiched between a line extending outward from a front end of the housing side wall to which the hinge is connected in a direction perpendicular to the housing side wall and a line extending from the front end of the housing side wall to the front outside at an angle of 45°.
